# EUROPÄISCHE PATENTANMELDUNG

(11) **EP 4 783 213 A1**
(43) Veröffentlichungstag der Anmeldung: **29.07.2026**
(21) Anmeldenummer: 25220440.9
(22) Anmeldetag: 03.12.2025
(51) Int. Cl.: H01H 9/54

(54) **SCHALTGERÄT**

(30) Priorität: 27.01.2025 DE 102025102794
(71) Anmelder: Ellenberger & Poensgen GmbH, 90518 Altdorf (DE)
(72) Erfinder: KÖPF, Hendrik-Christian, 90480 Nürnberg (DE); LABS, Alexander, 90610 Winkelhaid (DE); STEEGMÜLLER, Peter, 90449 Nürnberg (DE)
(74) Vertreter: FDST Patentanwälte

(57) **Zusammenfassung**

Die Erfindung betrifft ein Schaltgerät (12) mit zwei Anschlüssen (14), die mittels eines ersten Strompfads (18) elektrisch verbunden sind, der einen mechanischen Schalter (20) aufweist. Das Schaltgerät (12) umfasst ferner einen zweiten Strompfad (28), der elektrisch parallel zu dem ersten Strompfad (16) geschaltet ist, und der einen Brückengleichrichter (30) mit einer Wechselspannungsseite (34) und einer Gleichspannungsseite (38) aufweist. Die Wechselspannungsseite (34) ist mit den Anschlüssen (14) verbunden, und die Gleichspannungsseite (38) ist mittels einer Schaltereinheit (42) elektrisch verbunden. Ferner betrifft die Erfindung einen Schutzschalter (10).

## Beschreibung

Die Erfindung betrifft ein Schaltgerät. Das Schaltgerät umfasst zwei Anschlüsse, die mittels eines ersten Strompfads elektrisch verbunden sind, der einen mechanischen Schalter aufweist. Ferner betrifft die Erfindung einen Schutzschalter mit einem derartigen Schaltgerät.

Üblicherweise werden Schutzschalter zur Absicherung einer elektrischen Leitung oder eines Geräts gegenüber einer Fehlfunktion des zugeordneten Stromkreises herangezogen, beispielsweise einer übermäßigen anliegenden elektrischen Spannung oder eines übermäßigen fließenden elektrischen Stroms. Dieser tritt beispielsweise bei einer Vorschädigung des abzusichernden Geräts oder der elektrischen Leitung auf. In diesem Fall erfolgt mittels des Schutzschalters ein Unterbrechen des Stromflusses, sodass eine weitere Beschädigung vermieden wird.

Zum Unterbrechen des Stromflusses weist der Schutzschalter ein Schaltgerät mit einem Schalter auf. Zur Bereitstellung eines Berührschutzes und zur leichten Montage ist der Schalter dabei innerhalb eines Gehäuses angeordnet. Der Schalter ist beispielsweise als Halbleiterschalter ausgestaltet. Dieser weist konstruktionsbedingt einen Innenwiderstand auf, weswegen dieser bei Betrieb erwärmt wird, zumindest wenn ein vergleichsweise großer elektrischer Strom geführt wird. Somit ist eine Kühlung erforderlich. Auch ist ein Wirkungsgrad verringert. In einer Alternative hierzu ist der Schalter mechanisch ausgestaltet und in Wirkverbindung mit einem Antrieb, der beispielsweise einen Elektromagneten umfasst. Mittels Bestromung des Antriebs ist es somit möglich, den Schaltzustand des Schalters zu verändern. Falls dabei die zu schalten elektrische Spannung vergleichsweise groß ist, ist es möglich, dass sich beim Öffnen des mechanischen Schalters ein Lichtbogen bildet.

Aus der WO 2010/108565 A1 ist ein Hybridschalter (hybrider Trennschalter) mit einem mechanischen Schalter oder Trennelement und einer diesem parallel geschalten Halbleiterelektronik bekannt, die einen Halbleiterschalter, vorzugsweise einen IGBT, umfasst. Die Halbleiterelektronik weist keine zusätzliche Energiequelle auf und ist bei geschlossenem mechanischem Schalter stromsperrend, d. h. praktisch strom- und spannungslos. Zur Stromunterbrechung über den Hybridschalter wird der mechanische Schalter geöffnet, wobei der Lichtbogen entstehen kann. Die Energie des beim Öffnen des mechanischen Schalters entstehenden Lichtbogens wird von der die Halbleiterelektronik genutzt, wobei die Halbleiterelektronik derart mit dem mechanischen Schalter verschaltet ist, dass bei sich öffnendem mechanischem Schalter die Lichtbogenspannung über diesen (infolge des Lichtbogens) der Halbleiterschalter stromleitend schaltet.

Bei einer derartigen Ausführung wird somit mittels des Halbleiterschalters, nämlich mittels des IGBTs, die vollständige an dem Hybridschalter anliegende elektrische Spannung sowie der damit geführte elektrische Strom geschaltet, die jeweils vergleichsweise große sein können. Somit sind Anforderungen an den IGBT erhöht, weswegen dieser vergleichsweise kostenintensiv ist. Dabei ist es lediglich möglich, mittels des IGBTs ein elektrischer Stromfluss in eine Stromrichtung zu schalten, weswegen bei der Montage des Hybridschalters auf die korrekte Orientierung zu achten ist. Bei einer falschen Orientierung könnte der elektrische Strom nicht geschaltet werden, weswegen mittels des Schutzschalters keine Sicherheitsfunktionen mehr realisiert wäre.

Der Erfindung liegt die Aufgabe zugrunde, ein besonders geeignetes Schaltgerät und einen besonders geeigneten Schutzschalter anzugeben, wobei vorteilhafterweise Herstellungskosten reduziert sind, und wobei zweckmäßigerweise eine Montage vereinfacht und/oder eine Fehleranfälligkeit dabei reduziert ist.

Hinsichtlich des Schaltgeräts wird diese Aufgabe durch die Merkmale des Anspruchs 1 und hinsichtlich des Schutzschalters durch die Merkmale des Anspruchs 7 erfindungsgemäß gelöst. Vorteilhafte Weiterbildungen und Ausgestaltungen sind Gegenstand der Unteransprüche.

Das Schaltgerät dient insbesondere dem Schalten eines elektrischen Stroms, also insbesondere dem Erstellen und/oder Unterbrechen eines elektrischen Stromflusses. Hierfür weist das Schaltgerät zweckmäßigerweise zwei Zustände auf, nämlich einen elektrisch leitenden Zustand, der auch als geschlossener Zustand bezeichnet wird. In diesem Fall ist es möglich, mittels des Schaltgeräts den elektrischen Strom zu führen. Bei dem anderen Zustand, der als geöffneter oder elektrisch nichtleitender Zustand bezeichnet wird, ist insbesondere ein elektrischer Stromfluss über das Schaltgerät nicht möglich. Beispielsweise ist das Schaltgerät manuell betätigt/betätigbar, sodass es sich bei dem Schaltgerät um einen Handschalter handelt. Alternativ oder in Kombination hierzu ist es zum Beispiel möglich, das Schaltgerät elektrisch zu betätigen und somit insbesondere aus der Ferne. In einer weiteren Alternative ist das Schaltgerät beispielsweise automatisch betätigt, zweckmäßigerweise in Abhängigkeit von bestimmten Bedingungen. Geeigneterweise ist das Schaltgerät ein Bestandteil eines Schutzschalter oder eines Schütz.

Der Schutzschalter dient zum Beispiel der Absicherung eines Geräts, und der Schutzschalter ist beispielsweise ein Geräteschutzschalter. Alternativ oder in Kombination hierzu dient der Schutzschalter der Absicherung einer Leitung und ist somit ein Leitungsschutzschalter. Insbesondere wird der Schutzschalter in einem Gleichspannungskreis eingesetzt, also zum Beispiel zwischen einer Last und einem Gleichspannungszwischenkreis oder dergleichen, sodass insbesondere ein Stromkreis gebildet ist. Vorzugsweise liegt hierbei im Gleichspannungskreis eine elektrische Gleichspannung zwischen 400 V und 650 V an, also insbesondere höherer Gleichspannung. Vorzugsweise wird der Schutzschalter zur Absicherung eines Aktors bei einer Industrieanlage verwendet. Der Aktor bildet hierbei insbesondere die Last. Zweckmäßigerweise wird der Schutzschalter im Bereich der Industrieautomation verwendet. Insbesondere ist die mittels des Schutzschalters geschaltete elektrische Spannung 24 V, 48 V, 380 V, 650 V, 760 V. Bei einer Alternative wird der Schutzschalter zur Absicherung einer Straßenbeleuchtung, eines Schiffsbordnetzes, Bahnanwendungen-Infrastruktur, Bahnanwendungen-Antrieb oder im Bereich der elektrifizierten Luftfahrt verwendet. Bei einer weiteren Alternative wird der Schutzschalter im Ausbau und Integration erneuerbarer Energieerzeuger, bei Inselnetzen, im privaten häuslichen Bereich, in Gewächshäusern, bei der Elektrifizierung straßengebundener Mobilität (Elektromobilität), Landwirtschaft oder bei Baustellenfahrzeugen verwendet. Die verwendet elektrische (Gleich-)Spannung ist dabei zum Beispiel zwischen 1500 V und 3000 V oder beträgt 110 V, 380 V, 400 V 800 V, 1000 V 1500 V, 3000 V. Zusammenfassend wird alternativ zur Anwendung bei einer Industrieanlage der Schutzschalter beispielsweise bei einem Elektrofahrzeug verwendet, wie einem Kraftfahrzeug, einem Flugzeug oder einem Schiff/Boot.

In einer Alternative hierzu ist beispielsweise das Schaltgerät als ein Trennschalter ausgebildet oder einen Bestandteil davon, der auch als Trenner bezeichnet wird. Beispielsweise umfasst das Schaltgerät einen mechanischen Hebel, mittels dessen der Schaltzustand des Steuergeräts verändert werden kann.

Das Schaltgerät umfasst zwei Anschlüsse, an die im Montagezustand weitere Bestandteile des Stromkreises angeschlossen sind. Hierfür sind die Anschlüsse geeignet, insbesondere vorgesehen und eingerichtet. Zweckmäßigerweise ist hierfür an dem jeweiligen Anschluss ein Kabel oder eine Stromschiene angeschlossen, wobei ein Querschnitt dieser zum Beispiel zwischen 10 mm2 und 100 mm2 oder zwischen 25 mm2 und 92 mm2 ist. Der Querschnitt beträgt beispielsweise 16 mm2, 25 mm2 oder 35 mm2. Der Querschnitt ist beispielsweise 6 mm2, zwischen 6mm2 und 16 mm2 oder zwischen 16 mm2 und 50 mm2. Insbesondere sind die Anschlüsse nach Art von Käfigklemmen ausgebildet oder umfassen zumindest diese.

Die beiden Anschlüsse sind mittels eines ersten Strompfads miteinander elektrisch verbunden. Beispielsweise sind hierbei die beiden Anschlüsse mittels des ersten Strompfads direkt miteinander elektrisch kontaktiert, oder mit dem ersten Strompfads ist noch ein weiteres Bauteil elektrisch in Reihe geschaltet, über das und den ersten Strompfad dann die beiden Anschlüsse elektrisch miteinander verbunden sind. Der erste Strompfad ist geeigneterweise in einem Gehäuse angeordnet, das vorzugsweise aus einem Kunststoff gefertigt ist. Somit ist ein Berührschutz bereitgestellt, und dieser ist auch vor Umgebungseinflüssen geschützt. Zweckmäßigerweise sind die etwaigen Anschlüsse in das Gehäuse eingebracht, sodass eine elektrische Kontaktierung des ersten Strompfads von außerhalb des Gehäuses ermöglicht ist. Zweckmäßigerweise bildet das Gehäuse eine äußere Begrenzung des Schaltgeräts, und sämtliche weitere Bestandteile sind innerhalb des Gehäuses angeordnet und daher geschützt.

Der erste Strompfad und somit das Schaltgerät weist einen mechanischen Schalter auf. Somit ist der mechanische Schalter elektrisch zwischen die beiden Anschlüsse des Schaltgeräts geschaltet. Somit ist es möglich, mittels des mechanischen Schalters einen elektrischen Stromfluss über den ersten Strompfad zu schalten. Beispielsweise weist der erste Strompfad noch weitere Bauteile auf, oder zum Beispiel ist der erste Strompfad lediglich mittels des mechanischen Schalters sowie etwaige elektrischer Leitungen, wie Stromschienen, die zu dem elektrischen mechanischen Schalter führen, gebildet. Somit sind Herstellungskosten reduziert.

Das Schaltgerät weist ferner einen zweiten Strompfad auf, der elektrisch parallel zu dem ersten Strompfad geschaltet ist. Somit sind die beiden Anschlüsse auch mittels des zweiten Strompfads elektrisch miteinander verbunden. Sofern der erste Strompfad direkt mit den beiden Anschlüssen elektrisch kontaktiert ist, ist daher auch der zweite Strompfad direkt mit den Anschlüssen elektrisch kontaktiert. Falls dahingegen der erste Strompfad über ein weiteres Bauteil mit einem der Anschlüsse elektrisch kontaktiert ist, ist auch der zweite Strompfad elektrisch in Reihe mit diesem Bauteil geschaltet.

Der zweite Strompfad weist einen Brückengleichrichter auf, der eine Wechselspannungsseiten eine Gleichspannungsseite aufweist. Hierbei umfasste der Brückengleichrichter zwei Brückenzweige, die elektrisch parallel zwischen die Wechselspannungsseitenanschlüsse geschaltet sind, die die Wechselspannungsseite bilden. Jeder Brückenzweig weist mittig einen der Gleichspannungsseitenanschlüsse auf, mittels derer die Gleichspannungsseite des Brückengleichrichters gebildet ist. Der Brückengleichrichter ist zweckmäßigerweise passiv ausgestaltet und somit als Diodengleichrichter ausgebildet. Zweckmäßigerweise weist jeder der beiden Brückenzweige jeweils zwei elektrisch in Reihe geschaltete Dioden auf, wobei deren Sperrrichtung antiparallel zueinander sind, und wobei die beiden Brückenzweige unterschiedlich zueinander sind. Ein derartiger Brückengleichrichter wird auch als Zweipuls-Brücken-Gleichrichterschaltung B2 bezeichnet.

Die Gleichspannungsseite ist mittels einer Schaltereinheit elektrische verbunden, sodass diese mittels der Schaltereinheit zum Beispiel kurzgeschlossen ist oder zumindest werden kann. Die Schaltereinheit ist somit mit den Gleichspannungsseitenanschlüssen elektrisch verbunden. Hierbei ist es möglich, die Schaltereinheit in einen elektrisch leitfähigen und einen elektrisch nicht leitfähigen Zustand zu verbringen. Sofern die Schaltereinheit sich in dem elektrisch leitfähigen Zustand befindet, also geschlossen ist, sind die beiden Gleichspannungsseitenanschlüssen miteinander elektrisch niederohmig kontaktiert. Falls dahingegen die Schaltereinheit geöffnet ist, sich also im elektrisch nicht leitfähigen Zustand befindet, sind die beiden Gleichspannungsseitenanschlüssen hochohmig miteinander verbunden oder galvanisch zueinander getrennt. Folglich ist kein signifikanter elektrischer Stromfluss über den Brückengleichrichter und daher auch nicht über den zweiten Strompfad ermöglicht. Beispielsweise ist zwischen die Schaltereinheit und zumindest einen der Gleichspannungsseitenanschlüsse ein weiteres Bauteil geschaltet. Besonders bevorzugt jedoch ist die Schaltereinheit elektrisch direkt mit Gleichspannungsseitenanschlüssen kontaktiert. Somit sind Herstellungskosten reduziert.

Bei dem Schaltgeräte ist es somit möglich, zum Unterbrechen des elektrischen Stroms zunächst die Schaltereinheit in den elektrisch leitenden Zustand zu verbringen, sofern dies noch nicht der Fall ist, und anschließend den mechanischen Schalter zu öffnen. Infolgedessen kommutiert der elektrische Strom vollständig auf den zweiten Strompfad, weswegen sich bei dem mechanischen Schalter bei dem Öffnungsvorgang kein Lichtbogen ausbildet, oder dieser zusammenbricht. Daher erfolgt dort kein Abbrand, und es liegt keine thermische Belastung vor. Wenn nachfolgend die Schaltereinheit geöffnet wird, also in den elektrisch nichtleitenden Zustand verbracht wird, erfolgt ebenfalls kein Ausbilden eines Lichtbogens. Bei einer abweichenden Betriebsart wird zunächst der mechanischen Schalter geöffnet, und dann, wenn sich ein Lichtbogen ausbildet, wird für eine bestimmte Zeitspanne die Schaltereinheit in den elektrisch leitfähigen Zustand versetzt, sodass der elektrische Strom von dem ersten Strompfad auf den zweiten Strompfad kommutiert, und der Lichtbogen zusammenbricht. Anschließend wird die Schaltereinheit ebenfalls in den elektrisch nicht leitfähigen Zustand versetzt. Somit ist auch hier die Zeitdauer, während derer noch der elektrische Strom geführt wird, zeitlich begrenzt, wobei eine Dauer, während derer mittels der Schaltereinheit der elektrische Strom geführt wird, verkürzt ist.

Aufgrund des Brückengleichrichter ist es möglich, den elektrischen Stromfluss in beide Stromrichtung in zu schalten, auch wenn die Schaltereinheit lediglich zum Schalten des elektrischen Stromflusses in ein einzige Stromrichtung geeignet, sowie vorgesehen und eingerichtet ist. Folglich sind Herstellungskosten reduziert. So ist es insbesondere möglich, für die Schaltereinheit ein Halbleiterschalter, wie ein Feldeffekttransistor, einen MOSFET oder IGBT zu verwenden. Insbesondere umfasst die Schaltereinheit einen derartigen Halbleiterschalter oder ist damit gebildet. Zusammenfassend ist es nicht erforderlich, den Halbleiterschalter bidirektional auszugestalten, weswegen Herstellungskosten reduziert sind. Auch ist es nicht erforderlich, beim Anschluss von weiteren Bestandteilen des etwaigen Stromkreises an die Anschlüsse auf die Polarität zu achten, weswegen eine Montage vereinfacht ist. Dabei ist eine fehlerhafte Montage ausgeschlossen, was die Sicherheit erhöht. Zudem ist es möglich, mittels des Schaltgeräts auch einen etwaigen Rückstrom zu schalten, beispielsweise wenn aufgrund eines Fehlers oder dergleichen trotz des Einsatzes in dem Gleichspannungskreis der Rückstrom auftritt. Der Rückstrom ist hierbei in die entgegengesetzte Stromrichtung zu der Stromrichtung gerichtet, in die im Normalbetrieb der elektrische Strom geführt wird.

Beispielsweise ist der mechanische Schalter lediglich manuell betätigbar. Besonders bevorzugt jedoch ist ein Antrieb vorhanden, mittels dessen der mechanische Schalter angetrieben ist. Somit ist es mittels Betriebs des Antriebs möglich, den Schaltzustand des mechanischen Schalters zu verändern. Beispielsweise ist es hierbei lediglich möglich, den Schaltzustand des mechanischen Schalters in eine Richtung zu verändern, also beispielsweise lediglich von dem elektrisch leitenden in den elektrisch nichtleitenden Zustand oder umgekehrt. Folglich ist die Konstruktion vereinfacht. Besonders bevorzugt jedoch ist es möglich, mittels des Antriebs den Schaltzustand des mechanischen Schalters in beide Richtungen zu verändern, also diesen sowohl in den elektrisch leitende als auch in den elektrisch nichtleitenden Zustand zu versetzen. Somit ist eine Funktionalität erhöht. Beispielsweise ist der Antrieb mechanisch ausgebildet. Besonders bevorzugt jedoch ist der Antrieb elektrisch ausgebildet. Zum Beispiel bildet die Kombination aus dem mechanischen Schalter und dem Antrieb ein Relais. Zweckmäßigerweise umfasst der Antrieb eine elektrische Spule. Hierbei wird bei Betrieb des Antriebs geeigneterweise ein magnetisches Bauteil, beispielsweise ein Permanentmagnet oder ein ferromagnetisches Bauteil, innerhalb der Spule bewegt.

Der Antrieb ist zum Beispiel als "Moving Magnet Aktuator" ausgebildet. Dem "Moving Magnet Aktuator" ("Moving Magnet Actuator") ist dabei auch das magnetische Bauteil zugeordnet, das beweglich gelagert ist. Zudem weist der "Moving Magnet Aktuator" eine Antriebseinheit mit einer oder mehreren elektrischen Spulen auf, die bei Betätigung des Antriebs bestromt werden, sodass zwischen diesen und dem Bauteil eine magnetische Wechselwirkung erfolgt. Die elektrischen Spulen sind dabei ortsfest gehalten. Da die elektrische(n) Spule(n) stationär gehalten ist/sind, ist eine Konstruktion vereinfacht, und es sind, mit Ausnahme der für die Lagerung erforderlichen Komponenten, keine weiteren beweglich Bauteile oder elektrische Verbindungen zwischen den beweglichen Bauteilen, nämlich dem Bauteil, und den stationären Bauteilen des "Moving Magnet Aktuators" erforderlich. Somit ist auch eine Reibung des "Moving Magnet Aktuators", der im Weiteren auch lediglich als Aktuator bezeichnet ist, verringert.

Vorzugsweise umfasst die Antriebseinheit zwei elektrische Spulen, die zum Beispiel baugleich sind. Zumindest jedoch sind die beiden elektrischen Spulen zueinander entlang einer Längsachse versetzt und konzentrisch zu dieser angeordnet. Das Bauteil befindet sich dabei insbesondere auf der Längsachse und ist entlang dieser beweglich gelagert. Dabei befindet sich bei einem Schaltzustand des mechanischen Schalters das Bauteil in einem zwischen den beiden elektrischen Spulen vorhandenen Luftspalt und wird dort beispielsweise mittels eines magnetischen Kurzschlussblechs gehalten. Im anderen Schaltzustand hingegen ist das Bauteil entlang der Längsachse versetzt.

Da die Anzahl der beweglichen Bestandteile des "Moving Magnet Aktuators", insbesondere lediglich das Bauteil, vergleichsweise gering ist, und diese insbesondere ein vergleichsweises geringes Gewicht aufweisen, ist eine Dynamik des Aktuators vergleichsweise hoch. Somit ist eine Trägheit beim Betätigen des mechanischen Schalters verringert. Infolgedessen ist mittels des Schaltgeräts ein vergleichsweises schnelles Schalten ermöglicht.

Beispielsweise ist das Schaltgerät mit den einzelnen Bestandteilen bereits gebildet. Besonders bevorzugt jedoch umfasst das Schaltgerät einen weiteren mechanischen Schalter, der elektrisch in Reihe zu dem ersten Strompfad und zu dem zweiten Strompfad zwischen die Anschlüsse geschaltet ist. Mittels dessen ist somit eine galvanische Trennung realisierbar, falls die Schaltereinheit nicht galvanisch trennend ausgebildet ist.

Beispielsweise umfasst der mechanische Schalter lediglich einen einzigen Bewegkontakt. Besonders bevorzugt jedoch weist der mechanische Schalter eine Kontaktbrücke mit zwei Bewegkontakten auf. Die Kontaktbrücke ist beweglich gelagert. Hierbei ist es möglich, jeden der Bewegkontakte in einen mechanisch direkten Kontakt mit jeweils einem zugeordneten Festkontakt zu verbringen oder diese voneinander zu beabstandeten. Folglich ist geeigneterweise der mechanische Schalter nach Art eines Doppelunterbrechers ausgebildet, weswegen die zwischen jedem Festkontakt und dem zugeordneten Bewegkontakt anliegende elektrische Spannung im geöffneten Schaltzustand des mechanischen Schalters reduziert ist. Infolgedessen ist ein Ausbilden eines Lichtbogens dort unterbunden, oder dies erfolgt erst bei einer vergleichsweise hohen anliegenden elektrischen Spannung. Die Kontaktbrücke ist insbesondere transversal verstellbar gelagert.

Zweckmäßigerweise ist jedem Festkontakt und dem zugeordneten Bewegkontakt eine Löschkammer zugeordnet. Falls lediglich ein Festkontakt und ein Bewegkontakt vorhanden sind, ist diesen ebenfalls vorzugsweise die Löschkammer zugeordnet. Mittels der Löschkammer erfolgt dabei insbesondere ein Löschen des jeweiligen Lichtbogens. Hierfür umfasst die Löschkammer zweckmäßigerweise mehrere Löschbleche oder dergleichen.

Beispielsweise umfasst die Schaltereinheit lediglich einen einzigen Halbleiterschalter. Dieser ist beispielsweise als Feldeffekttransistor, wie als MOSFET, oder als IGBT oder GTO ausgebildet. Besonders bevorzugt jedoch weist die Schaltereinheit mehrere elektrisch in Reihe geschaltete Halbleiterschalter auf. Hierbei ist insbesondere die Stromrichtung, die mittels jedes der Halbleiterschalter geschaltet werden kann gleich und in Abhängigkeit des Brückengleichrichter gewählt. Somit ist es insbesondere lediglich möglich, mittels der Schaltereinheit den elektrischen Strom lediglich in eine Richtung zu unterbrechen, obwohl mehrere Halbleiterschalter vorhanden sind. Beispielsweise umfasst die Schaltereinheit genau zwei oder drei entsprechende Halbleiterschalter. Geeigneterweise ist die Anzahl der Halbleiterschalter geringer als 10, weswegen ein Aufwand verringert ist. Insbesondere ist somit mittels der Halbleiterschalter eine Art Kaskode gebildet, und/oder diese sind nach Art einer Kaskode miteinander verschaltet.

Jeder der Halbleiterschalter ist mittels eines Widerstandselements elektrisch überbrückt. Mittels der Widerstandselemente ist dabei jeweils ein bestimmter elektrischer Widerstand bereitgestellt, der beispielsweise konstant oder variabel ist. Insbesondere ist hierbei der jeweilige elektrische Widerstand abhängig von einem bestimmten Zustand des Schaltgeräts und/oder externen Vorgaben. Insbesondere ist der elektrische Widerstand abhängig von einem mittels des Schaltgeräts geführten elektrischen Stroms und/oder einer daran anliegenden elektrischen Spannung.

Mittels der Widerstandselemente ist insbesondere ein Spannungsteiler bereitgestellt, mittels dessen die über jeden der Halbleiterschalter anfallende elektrische Spannung verringert. Infolgedessen sind die Anforderungen an die Halbleiterschalter verringert, und es können vergleichsweise kostengünstige Bauteile verwendet werden, oder zumindest Halbleiterschalter, bei denen die maximal schaltbare elektrische Spannung verringert ist. Somit sind zwar mehr Halbleiterschalter vorhanden, jedoch sind diese überproportional kostengünstiger, weswegen Herstellungskosten insgesamt reduziert sind. Hierbei ist es lediglich erforderlich, die Halbleiterschalter im Wesentlichen gleichzeitig zu betätigen, sodass an einem der Halbleiterschalter die an den Anschlüssen anliegende elektrische Spannung anliegt, zumindest nicht für eine vergleichsweise lange Zeitdauer.

Insbesondere ist hierbei die Schaltereinheit modular aufgebaut und weist beispielsweise mehrere entsprechende Sockel auf, in die dann der jeweilige Halbleiterschalter sowie das korrespondierende Widerstandselemente eingesteckt werden. Vorzugsweise ist dabei mittels jeder der Widerstandselemente und des zugeordneten Halbleiterschalters ein Untermodul gebildet. Zweckmäßigerweise sind mehrere entsprechende Sockel vorhanden, von denen in einige, insbesondere in Abhängigkeit der zu schaltenden elektrischen Spannung, eines der Untermodule eingesetzt ist. Die anderen der Sockel sind vorzugsweise mittels einer Kurzschlussbrücke miteinander verbunden. Somit ist es möglich, die Anzahl der verwendeten Untermodule auf die zu schalten elektrische Spannung anzupassen, wobei Gleichteile verwendet werden können, weswegen Herstellungskosten weiter verringert sind. Wenn höhere elektrische Spannungen geschaltet werden sollen, werden insbesondere Kurzschlussbrücken durch Untermodule ersetzt.

Beispielsweise sind die Widerstandselemente zueinander unterschiedlich. Somit ist es möglich, diese auf unterschiedliche Widerstandselemente anzupassen. Besonders bevorzugt jedoch sind die Widerstandselemente zueinander baugleich. Somit ist die bei dem mittels des jeweiligen Widerstandselements überbrückten Halbleiterschalter anfallende elektrische Spannung gleich, wenn dieser elektrisch nichtleitend ist, weswegen eine Konzeption und ein Betrieb vereinfacht ist. Auch ist es aufgrund der Baugleichheit möglich, Gleichteile zu verwenden, weswegen Herstellungskosten reduziert sind. Insbesondere sind hierbei auch die Halbleiterschalter zueinander baugleich.

Beispielsweise sind die Widerstandselemente ohmsche Widerstände. Somit sind Herstellungskosten verringert. Alternativ oder in Kombination hierzu sind die Widerstandselemente oder zumindest einige als temperaturabhängige Widerstände ausgebildet, was eine Sicherheit erhöht. Besonders bevorzugt jedoch sind die Widerstandselemente Varistoren. Mittels dieser wird dabei die maximal über der Halbleiterschalter anfallende elektrische Spannung begrenzt, und diese ist insbesondere auf die jeweils verwendeten Halbleiterschalter angepasst. Falls sich beim Öffnen oder beim Schließen eines der Halbleiterschalter eine Fehlfunktion vorliegen sollte, oder dies aufgrund von Fertigungstoleranzen oder aktuellen Bedingungen nicht synchron erfolgt, sondern zeitlich versetzt, ist es möglich, dass einige der Halbleiterschalter geöffnet sind, wohingegen andere geschlossen sind. Somit fällt an den geöffneten, also den nichtleitenden, Halbleiterschaltern eine erhöhte elektrische Spannung an. Mittels der Varistoren wird eine Beschädigung dieser vermieden, und wenn sich sämtliche Halbleiterschalter in dem elektrisch nichtleitenden Zustand oder in dem elektrisch leitenden Zustand befinden, wird mittels der Varistoren kein elektrischer Strom mehr geführt, sodass dann wieder die ursprüngliche Funktionalität der Halbleiterschalter bereitgestellt ist. Zusammenfassend sind aufgrund der Varistoren die Anforderungen an die Ansteuerung der Halbleiterschalter verringert, weswegen Herstellungskosten verringert sind.

Bevorzugt ist zu einem der Halbleiterschalter ein ohmscher Widerstand elektrisch parallel gestaltet geschaltet. Beispielsweise ist dieser ohmsche mittels eines der Widerstandselemente bereitgestellt, oder es ist zusätzlich zu einem der Widerstandselemente der ohmsche Widerstand elektrisch parallelgeschaltet. Aufgrund des ohmschen Widerstands ist es somit möglich die Halbleiterschalter, mit Ausnahme des mittels des ohmschen Widerstands überbrückten Halbleiterschalters, in den elektrisch leitfähigen Zustand zu versetzen, sodass mittels des zweiten Strompfads ein elektrischer Strom geführt wird. Aufgrund des ohmschen Widerstands ist dieser jedoch begrenzt, sodass das Schaltgerät auch zur Vorladung in dem etwaigen Stromkreis/Gleichspannungskreis verwendet werden kann. Hierbei befindet sich der mechanische Schalter in dem elektrisch nicht leitfähigen Zustand.

Beispielsweise ist lediglich der ohmsche Widerstand vorhanden, oder dieser ist elektrisch in Reihe mit einer elektrischen Spule geschaltet, weswegen der zugeordnete Halbleiterschalter mittels der Reihenschaltung überbrückt ist. Besonders bevorzugt ist einer der Halbleiterschalter mittels des ohmschen Widerstands als auch mittels der Reihenschaltung aus (einem anderen) ohmschen Widerstand und der Spule überbrückt. Alternativ oder in Kombination hierzu ist dieser Halbleiterschalter mittels eines temperaturabhängigen Widerstands überbrückt. Aufgrund dieses Vorgehens ist es möglich, den mittels des zweiten Strompfads zur Vorladung geführten elektrischen Stroms vergleichsweise genau einzustellen, wenn der mechanische Schalter geöffnet ist. Somit ist die Verwendung des Schaltgeräte zur Vorladung verbessert.

Alternativ oder besonders bevorzugt Kombination hierzu ist zu einem anderen der Halbleiterschalter ein Kondensator elektrisch parallelgeschaltet. Beispielsweise ist mittels des Kondensators das Widerstandselement gebildet, oder besonders bevorzugt ist der Kondensator parallel zu dem dem gleichen Halbleiterschalter zugeordneten Widerstandselement geschaltet. Der Kondensator wirkt nach Art eines Spannungsteilers, und die über den zugeordneten Halbleiterschalter anfallende elektrische Spannung ist begrenzt. Zudem werden mittels des Kondensators anfallende elektrische Spannungs- und/oder Stromspitzen reduziert, weswegen auch anfallende Verluste beim Betätigen des Halbleiterschalters verringert sind.

Zur Vorladung wird dabei insbesondere der Halbleiterschalter, zu dem der ohmsche Widerstand elektrisch parallelgeschaltet ist, in den elektrisch leitfähigen Zustand versetzt. Der Halbleiterschalter, bei dem der Kondensator elektrisch parallelgeschaltet ist, wird zumindest zeitweise in den elektrisch leitfähigen Zustand versetzt, sodass mittels des Schaltgeräts der elektrische Strom geführt wird. Wenn dieser vergleichsweise hoch ist und/oder nach einer bestimmten Zeitspanne, wird der Halbleiterschalter, zu dem der Kondensator elektrisch parallelgeschaltet ist, in den elektrisch nicht leitfähigen Zustand versetzt. Aufgrund des Kondensators ist die anfallende elektrische Spannung begrenzt, und auch entstehende Spannungsspitzen, was eine Zerstörung verhindert.

Der Schutzschalter dient insbesondere der Unterbrechung eines elektrischen Stroms, wenn ein Fehlerfall vorliegt, beispielsweise ein Überstrom und/oder ein Kurzschlussstrom. Alternativ oder in Kombination hierzu wird mittels des Schutzschalters der elektrischer Stromfluss unterbrochen, wenn eine anliegende elektrische Spannung übermäßig ist oder erfasst wurde, dass ein Lichtbogen vorliegt. Der Schutzschalter weist hierfür einen Sensor auf, mittels dessen insbesondere der etwaige Fehlerfall erfasst werden kann. Der Sensor dient hierbei insbesondere zur Erfassung eines Zustands des Schutzschalters und/oder des mittels des Schutzschalters geführten elektrischen Stroms.

Ferner weist der Schutzschalter ein Schaltgerät mit zwei Anschlüssen auf, die mittels eines ersten Strompfads elektrisch verbunden sind, der einen mechanischen Schalter aufweist. Das Schaltgeräte umfasst ferner einen zweiten Strompfad, der elektrisch parallel zu dem ersten Strompfad geschaltet ist, und der einen Brückengleichrichter mit einer Wechselspannungsseite und einer Gleichspannungsseite aufweist. Die Wechselspannungsseite ist mit den Anschlüssen verbunden, und die Gleichspannungsseite ist mittels einer Schaltereinheit elektrisch verbunden. Zweckmäßigerweise bilden die Anschlüsse des Schaltgeräts die Anschlüsse des Schutzschalters, und/oder das Schaltgerät weist ein Gehäuse auf, das auch das Gehäuse des Schutzschalters bildet.

Insbesondere ist der Sensor elektrisch in Reihe mit dem ersten und/oder zweite Strompfad geschaltet sind. Alternativ hierzu ist der Sensor elektrisch parallel zu dem erste und dem zweite Strompfad geschaltet. Zweckmäßigerweise sind mehrere entsprechende Sensoren vorhanden, sodass eine vergleichsweise genaue Bestimmung von unterschiedlichen Fehlerquellen ermöglicht ist. Hierbei ist beispielsweise einer der Sensoren als ein Spannungssensor und ein anderer als ein Stromsensor ausgebildet.

Der Schutzschalter umfasst ferner eine Steuereinheit, die signaltechnisch mit dem Sensor verbunden ist. Mittels der Steuereinheit ist das Schaltgerät betätigt, nämlich der mechanische Schalter und die Schaltereinheit. Diese werden insbesondere in den elektrisch nicht leitfähigen Zustand versetzt, wenn der Fehlerfall mittels des Sensors erfasst wurde. Insbesondere erfolgt hierbei das Anlegen einer entsprechenden elektrischen Spannung an die Schaltereinheit und/oder ein Bestromen des etwaigen Antriebs mittels der Steuereinheit. Wenn der Fehlerfall vorliegt, wird insbesondere mittels der Steuereinheit der mechanische Schalter geöffnet und somit in den nicht leitenden Zustand versetzt. Anschließend oder kurz vorher wird die Schaltereinheit in den leitfähigen Zustand versetzt, sodass der elektrische Strom zwischen den beiden Anschlüssen auf den zweiten Strompfad kommutiert. Wenn dies erfolgt und der mechanische Schalter weit genug geöffnet ist, wird auch die Schaltereinheit in den elektrisch nicht leitfähigen Zustand versetzt, sodass der elektrische Stromfluss zwischen den beiden Anschlüssen vollständig unterbunden ist. Beispielsweise ist hierbei zusätzlich der etwaige weitere mechanische Schalter vorhanden. Diese wird zweckmäßigerweise, wenn der elektrische Stromfluss zwischen den Anschlüssen vollständig unterbunden ist, geöffnet, sodass dort ebenfalls kein elektrischer kein Lichtbogen auftritt. Jedoch sind dann die beiden Anschlüsse zueinander galvanisch getrennt.

Die im Zusammenhang mit dem Schaltgerät erläuterten Weiterbildungen und Vorteile sind sinngemäß auch auf den Schutzschalter sowie untereinander zu übertragen und umgekehrt.

Nachfolgend wird ein Ausführungsbeispiel der Erfindung anhand einer Zeichnung näher erläutert. Darin zeigen:
- Fig. 1: schematisch einen Gleichspannungskreis mit einer Last und einem Schutzschalter, und
- Fig. 2: einen vereinfachten Schaltplan des Schutzschalters, der ein Schaltgeräte umfasst.

Einander entsprechende Teile sind in allen Figuren mit den gleichen Bezugszeichen versehen.

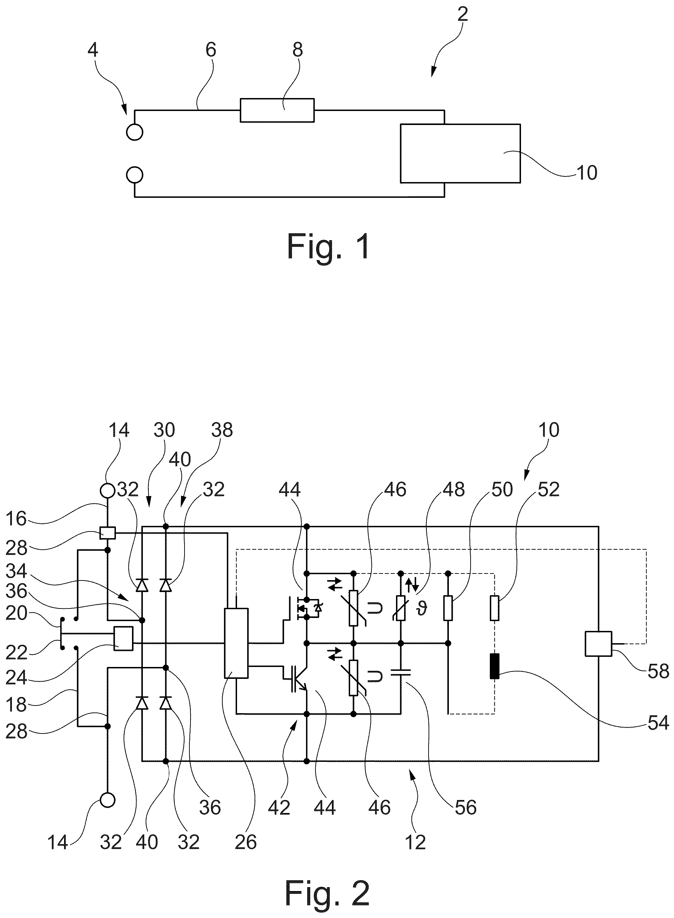

In Figur 1 ist schematisch vereinfacht ein Gleichspannungskreis 2 dargestellt, der eine Gleichspannungsquelle 4 umfasst. Mittels dieser wird eine elektrische Gleichspannung von 650 V bereitgestellt, und mittels dieser ist ein Gleichspannungszwischenkreis 6 gespeist. Mittels dessen ist eine Last 8 versorgt, die über einen Schutzschalter 10 mit dem Gleichspannungszwischenkreis 6 elektrisch verbunden ist.

In Figur 2 ist ein Schaltplan des Schutzschalters 10 dargestellt. Der Schutzschalter 10 weist ein Schaltgerät 12 auf, das zwei Anschlüsse 14 umfasst. Die Anschlüsse 14 bilden hierbei auch die Anschlüsse des Schutzschalters 10, und im Montagezustand ist an einem eine Leitung des Gleichspannungskreises 6 und an dem anderen eine zu der Last 8 führende Leitung angeschlossen. Die beiden Anschlüsse 14 sind mittels eines weiteren Strompfads 16 und eines ersten Strompfads 18 des Schaltgeräts 12 elektrisch miteinander verbunden, die elektrisch in Reihe geschaltet sind.

Der erste Strompfad 18 weist einen mechanischen Schalter 20 auf, der als ein Doppelunterbrecher ausgebildet ist. Hierfür weist der mechanische Schalter 20 eine senkrecht zu deren Ausdehnungsrichtung beweglich gelagerte Kontaktbrücke 22 auf, deren Enden jeweils ein Bewegkontakt zugeordnet ist. Mittels Verstellens der Kontaktbrücke 22, ist es möglich, jeden Bewegkontakte an jeweils einen zugeordneten Festkontakt anzulegen oder zu beabstanden. Wenn die Bewegkontakte an den Festkontakten anliegen, ist der mechanische Schalter 20 geschlossen und somit elektrisch leitfähig. Bei einer Beabstandung hingegen ist der mechanische Schalter 20 geöffnet, und ein elektrischer Stromfluss über diesen ist nicht ermöglicht.

Der mechanische Schalter 20 ist mittels eines Antriebs 24 des Schaltgeräts 12 angetrieben, sodass eine Art Relais gebildet ist. Der Antrieb 24 ist hierbei als ein Moving Magnet Aktuator ausbildet. Die Bestromung des Antriebs 24 erfolgt mittels einer Steuereinheit 26 des Schutzschalters 10. Somit wird der mechanische Schalter 20 über den zugeordneten Antrieb 24 mittels des Steuereinheit 26 des Schaltgeräte des Schutzschalters 10 betätigt. Die Betätigung erfolgt hierbei, wenn mittels eines Sensors 28, der in den weiteren Strompfad 16 eingebracht ist, ein Fehlerfall erkannt wurde. Hierfür ist der Sensor 28 zur Ermittlung des über den weiteren Strompfad 16 fließenden elektrischen Stroms ausgebildet und signaltechnisch mit der Steuereinheit 26 verbunden. Der Sensor 28 ist nach Art eines Shunts ausgebildet und weist einen Messwiderstand auf, der mittels eines Operationsverstärkers oder dergleichen überbrückt ist, sodass die über den Messwiderstand anfallende elektrische Spannung mittels der Steuereinheit 26 erfasst werden kann. Dabei erfolgt ein Öffnen des mechanischen Schalters 20, wenn ein Kurzschlussstrom oder ein Überstrom vorliegt, also beispielsweise das Zehnfache oder Dreifache des Nennstroms des Schutzschalters 10 für eine jeweils zugeordnete Zeitspanne.

Beim Öffnen des mechanischen Schalters 20 ist es möglich, dass sich zwischen den Bewegkontakten und den Festkontakten ein Lichtbogen ausbildet, sodass trotz geöffnetem mechanischen Schalter 20 der elektrische Stromfluss zwischen den beiden Anschlüssen 14 fortbesteht. Zum Löschen der Lichtbögen sind einerseits nicht näher dargestellte Löschkammern vorhanden. Andererseits umfasst das Schaltgerät 12 einen zweite Strompfad 28, der parallel zu dem ersten Strompfad 16 geschaltet ist. Somit sind die beiden Anschlüsse 14 auch mittels elektrischen in Reihe mit dem weiteren Strompfad 16 geschalteten zweiten Strompfad 28 elektrisch miteinander verbunden. Wenn über den mechanischen Schalter 20 entsprechenden Lichtbögen vorhanden sind, wird mittels der Steuereinheit 26 der zweite Strompfad 28 in den elektrisch leitenden Zustand versetzt. Somit kommutiert der elektrische Strom von dem ersten Strompfad 18 auf den zweiten Strompfad 28, weswegen die Lichtbögen über den mechanischen Schalter 20 erlöschen. Dann wird mittels der Steuereinheit 26 wiederum der zweite Strompfad 28 in den elektrisch nichtleitenden Zustand versetzt, sodass kein elektrischer Stromfluss zwischen den Anschlüssen 14 mehr möglich ist.

Der zweite Strompfad 28 weist einen passiven Brückengleichrichter 30 auf, der somit mittels vier Dioden 32 gebildet ist. Der Brückengleichrichter 30 weist Wechselspannungsseite 34 auf, die mittels zweier Wechselspannungsseitenanschlüssen 36 gebildet ist. Diese sind jeweils gegen einen der Anschlüsse 14 geführt. Somit ist die Wechselspannungsseite 34 mit den Anschlüssen 14 verbunden. Auch umfasst der Brückengleichrichter 30 eine Gleichspannungsseite 38, die mittels zweier Gleichspannungsseitenanschlüsse 40 gebildet ist. Jeder Wechselspannungsseitenanschluss 36 ist über jeweils eine der Dioden 32 mit beiden Gleichspannungsseitenanschlüsse 40 elektrisch kontaktiert, wobei die Sperrrichtung der jeweiligen beiden Dioden 32 unterschiedlich ist.

Die beiden Gleichspannungswandler 40 sind mit einer Schaltereinheit 42 elektrisch verbunden, sodass die Gleichspannungsseite 38 mittels der Schaltereinheit 42 elektrisch verbunden ist. Die Schaltereinheit 42 ist mittels der Steuereinheit 26 betätigt, nämlich der die Lichtbögen zu einem Erlöschen zu bringen. Aufgrund des Brückengleichrichters 36 fließt dabei der elektrische Strom stets in der gleichen Richtung, unabhängig davon, in welche Richtung dieser zwischen den beiden Anschlüssen 14 fließt.

Die Schaltereinheit 42 weist zwei Halbleiterschalter 44 auf, die elektrisch in Reihe geschaltet sind, wobei die Reihenschaltung gegen die Gleichspannungsseitenanschlüsse 40 geführt ist. Die beiden Halbleiterschalter 44 sind mittels der Steuereinheit 26 betätigt, mittels derer eine geeignete Steuerspannung angelegt wird, sodass die Halbleiterschalter 44 entweder elektrisch leitfähig oder elektrisch nicht leitfähigen sind. Hierbei sind die beiden Halbleiterschalter 44 derart angeordnet, dass der elektrische Strom lediglich in eine einzige Richtung geschaltet werden kann, nämlich die, die mittels des Brückengleichrichters 30 vorgegeben ist. Somit ist eine Kaskode gebildet. Einer der Halbleiterschalter 44 ist als ein MOSFET, und der andere als ein IGBT ausgebildet.

Die beiden Halbleiterschalter 44 sind mittels jeweils eines Widerstandselements 46 elektrisch überbrückt, weswegen die Widerstandselemente 46 elektrisch in Reihe zwischen die beiden Gleichspannungsseitenanschlüsse 40 geschaltet sind. Die Widerstandselemente 46 sind zueinander baugleich, und mittels dieser ist ein Spannungsteiler bereitgestellt. Infolgedessen beträgt die über jedem der Halbleiterschalter 44 anliegende elektrische Spannung der Hälfte der an den Anschlüssen 14 anliegende elektrische Spannung, wenn der Schutzschalter 10 im elektrisch nichtleitenden Zustand ist, was die Anforderungen an die Halbleiterschalter 44 verringert. Zum Verändern des Schaltzustands der Schaltereinheit 42 werden die Halbleiterschalter 44 im Wesentlichen zeitgleich betätigt, nämlich jeweils in den elektrisch leitenden oder in den elektrisch nichtleitenden Zustand versetzt.

Die Widerstandselemente 46 sind als Varistoren ausgebildet. Falls mittels der Schaltereinheit 26 keine synchrone Ansteuerung der Halbleiterschalter 44 erfolgt, wenn beispielsweise diese in den elektrisch leitenden Zustand versetzt werden sollen, wobei dies bei einem der Halbleiterschalter 44 verfrüht erfolgt, wird aufgrund der vergrößerten über den elektrisch nichtleitenden Halbleiterschalter 44 anfallende elektrische Spannung mittels des zugeordneten Varistors der elektrische Strom geführt. Somit wird einerseits die Beschädigung dieses Halbleiterschalters 44 verhindert. Andererseits wird somit das Schaltereinheit 42 im Wesentlichen schlagartig in den vollständig elektrisch leitenden Zustand versetzt. Somit sind die Anforderungen an die Steuereinheit 26 verringert.

Zudem ist zu einem der Halbleiterschalter 44, nämlich zu dem MOSFET, ein temperaturabhängiger Widerstand 48, sowie ein erster ohmscher Widerstand 50 und eine Reihenschaltung aus einem zweiten ohmschen Widerstand 52 und eine Induktivität 54 geschaltet. In einer nicht näher dargestellten Variante ist von diesen zumindest eine oder zwei weggelassen, beispielsweise der erste ohmsche Widerstand 50, die Reihenschaltung aus dem zweiten ohmschen Widerstand 52 und der Induktivität und/oder der temperaturabhängiger Widerstand 48.

Der jeweils andere Halbleiterschalter 44, in diesem Fall der IGBT, ist mittels eines Kondensators 56 überbrückt, der diesem somit elektrisch parallelgeschaltet ist. Ferner ist ein weiterer Sensor 58 vorhanden, der mittels der Steuereinheit 26 ausgelesen wird, und mittels dessen die über die Schaltereinheit 42 anfallende elektrische Spannung gemessen werden kann.

Infolgedessen ist es auch möglich, den Schutzschalter 12 zur Vorladung der Last 8 zu verwenden, also wenn diese das erste Mal oder wenn etwaige Kapazitäten entladen sind, an die Gleichspannungsquelle 4 geschlossen wird. Für die Dauer der Vorladung bleiben der mechanische Schalter 20 und einer der Halbleiterschalter 44, nämlich der MOSFET, in dem elektrisch nicht leitfähigen Zustand versetzt.

Der andere Halbleiterschalter 44, nämlich der IGBT, wird zeitweise in den elektrisch leitfähigen Zustand versetzt, zumindest solange mittels des weiteren Sensors 58 erfasst wird, dass die anliegende elektrische Spannung oberhalb eines Grenzwerts ist. Bei elektrisch leitfähigen IGBT fließt über diesen sowie den temperaturabhängigen Widerstand 48, den ersten ohmschen Widerstand 50 bzw. den zweiten ohmschen Widerstand 52/die Induktivität 56 der elektrische Strom, der somit begrenzt ist. Die Widerstände 48, 50, 52 und die Induktivität 56 sind dabei auf die verwendete Last 8 angepasst. Mittels der Induktivität 56 wird dabei ein Stromanstieg verringert.

Um eine Überbelastung zu vermeiden, wird nach einer bestimmten Zeitdauer der IGBT in den elektrisch nichtleitenden Zustand versetzt, sodass der elektrische Stromfluss zusammenbricht. Mittels des Kondensators 56 werden dabei entstehende Spannungsspitzen geglättet, was eine Belastung vermeidet. Im Anschluss hieran wird der IGBT erneut in den elektrisch nichtleitenden Zustand versetzt, sodass erneut der elektrische Stromfluss über den Schutzschalter 10 auftritt, der zur Vorladung verwendet werden kann. Dies wird so lange wiederholt, bis die Last 8 ausreichend geladen ist. Dann wird der mechanische Schalter 20 in den elektrisch leitenden Zustand versetzt, sodass ein abschließendes Laden der Last 8 erfolgen kann. Im Anschluss daran wird mittels des Schutzschalters 10 erneut auf das Vorliegen des Fehlerfalls überprüft, und gegebenenfalls das Schaltgerät 12 in den elektrisch nichtleitenden Zustand versetzt.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

### Bezugszeichenliste

- 2: Gleichspannungskreis
- 4: Gleichspannungsquelle
- 6: Gleichspannungszwischenkreis
- 8: Last
- 10: Schutzschalter
- 12: Schaltgerät
- 14: Anschluss
- 16: weiterer Strompfad
- 18: erster Strompfad
- 20: mechanischer Schalter
- 22: Kontaktbrücke
- 24: Antrieb
- 26: Steuereinheit
- 28: zweiter Strompfad
- 30: Brückengleichrichter
- 32: Diode
- 34: Wechselspannungsseite
- 36: Wechselspannungsseitenanschluss
- 38: Gleichspannungsseite
- 40: Gleichspannungsseitenanschluss
- 42: Schaltereinheit
- 44: Halbleiterschalter
- 46: Widerstandselement
- 48: temperaturabhängiger Widerstand
- 50: erste ohmscher Widerstand
- 52: zweite ohmscher Widerstand
- 54: Induktivität
- 56: Kondensator
- 58: weiterer Sensor

## Patentansprüche

1. Schaltgerät (12) mit zwei Anschlüssen (14), die mittels eines ersten Strompfads (18) elektrisch verbunden sind, der einen mechanischen Schalter (20) aufweist, und mit einem zweiten Strompfad (28), der elektrisch parallel zu dem ersten Strompfad (16) geschaltet ist, und der einen Brückengleichrichter (30) mit einer Wechselspannungsseite (34) und einer Gleichspannungsseite (38) aufweist, wobei die Wechselspannungsseite (34) mit den Anschlüssen (14) verbunden ist, und wobei die Gleichspannungsseite (38) mittels einer Schaltereinheit (42) elektrisch verbunden ist.

2. Schaltgerät (12) nach Anspruch 1,
**dadurch gekennzeichnet,**
**dass** die Schaltereinheit (42) mehrere elektrisch in Reihe geschaltete Halbleiterschalter (44) aufweist, die jeweils mittels eines Widerstandselements (46) elektrisch überbrückt sind.

3. Schaltgerät (12) nach Anspruch 2,
**dadurch gekennzeichnet,**
**dass** die Widerstandselemente (46) zueinander baugleich sind.

4. Schaltgerät (12) nach Anspruch 2 oder 3,
**dadurch gekennzeichnet,**
**dass** die Widerstandselemente (46) Varistoren sind.

5. Schaltgerät (12) nach einem der Ansprüche 2 bis 4,
**dadurch gekennzeichnet,**
**dass** zu einem der Halbleiterschalter (44) ein ohmscher Widerstand (50, 52) elektrisch parallelgeschaltet ist.

6. Schaltgerät (12) nach Anspruch 5,
**dadurch gekennzeichnet,**
**dass** zu einem anderen der Halbleiterschalter (44) ein Kondensator (56) elektrisch parallelgeschaltet ist.

7. Schutzschalter (10) mit einem Schaltgerät (12) nach einem der Ansprüche 1 bis 6, und mit einem Sensor (28), der signaltechnisch mit einer Steuereinheit (26) verbunden ist, mittels derer das Schaltgerät (12) betätigt ist.
